# EUROPÄISCHE PATENTSCHRIFT

(11) **EP 1 141 138 B1**
(45) Veröffentlichungstag und Bekanntmachung des Hinweises auf die Patenterteilung: **15.09.2004**
(21) Anmeldenummer: 99965559.0
(22) Anmeldetag: 27.12.1999
(51) Int. Cl.: C09B 29/036, C09B 29/09, C09B 43/42

(54) **PHTHALIMIDYL-AZOFARBSTOFFE, VERFAHREN ZU DEREN HERSTELLUNG UND DEREN VERWENDUNG**
PHTHALIMIDYL AZO PIGMENTS, METHOD FOR PRODUCING SAME AND UTILISATION THEREOF
COLORANTS AZOIQUES DE PHTALIMIDYLE, LEUR PROCEDE DE PREPARATION ET LEUR UTILISATION

(30) Priorität: 31.12.1998 EP 98124859
(43) Veröffentlichungstag der Anmeldung: 10.10.2001
(73) Patentinhaber: Ciba Specialty Chemicals Holding Inc., 4057 Basel (CH)
(72) Erfinder: LAUK, Urs, CH-8047 Zürich (CH); CLEMENT, Antoine, CH-4058 Basel (CH); DREIER, Romeo, CH-4232 Fehren (CH); ARQUINT, Alfons, CH-4058 Basel (CH)
(86) Internationale Anmeldenummer: PCT/EP1999/010396
(87) Internationale Veröffentlichungsnummer: WO 2000/040656

(56) Entgegenhaltungen:
- EP-A- 0 443 984
- EP-A- 0 623 654
- EP-A- 0 667 376
- JP-A- 51 029 577
- US-A- 3 980 634

## Beschreibung

Gegenstand der vorliegenden Erfindung sind Dispersionsfarbstoffe mit einer N-Alkyl-phthalimid-Diazokomponente und einer Anilin-Kupplungskomponente, Verfahren zur Herstellung dieser Farbstoffe und ihre Verwendung zum Färben oder Bedrucken von Fasermaterialien, insbesondere polyesterhaltigen Fasermaterialien.

Dispersionsazofarbstoffe mit einer N-Alkyl-phthalimid-Diazokomponente und einer Anilin-Kupplungskomponente sind seit langem bekannt und werden zum Färben von hydrophoben Fasermaterialien verwendet.

In der EP-A 0 443 984 werden cyanosubstituierte N-Alkylphthalmid-Azofarbstoffe beschrieben, die Polyestern violette oder rote Färbungen mit guter Thermomigrierechtheit verleihen.

Ähnliche Farbstoffe sind aus dem U.S. Patent 3 980 634 bekannt; die damit gefärbten Polyestermaterialien weisen u.a. eine gute Lichtechtheit auf.

Es hat sich jedoch gezeigt, dass die mit den zur Zeit bekannten Farbstoffen erhaltenen Färbungen oder Drucke nicht in allen Fällen den heutigen Anforderungen, insbesondere im Bezug auf die Wasch- und Schweissechtheiten, genügen. Es besteht daher Bedarf nach neuen Farbstoffen, welche insbesondere gute Waschechtheitseigenschaften zeigen.

Es wurde nun überraschenderweise gefunden, dass die erfindungsgemässen Farbstoffe die oben angegebenen Kriterien weitgehend erfüllen.

Gegenstand der vorliegenden Erfindung sind somit Dispersionsfarbstoffe, die sehr waschund schweissechte Färbungen ergeben, und zudem sowohl im Auszieh- und Thermosolverfahren als auch im Textildruck ein gutes Aufbauvermögen besitzen. Die Farbstoffe sind auch für den Ätzdruck geeignet.

Die erfindungsgemässen Farbstoffe entsprechen der Formel 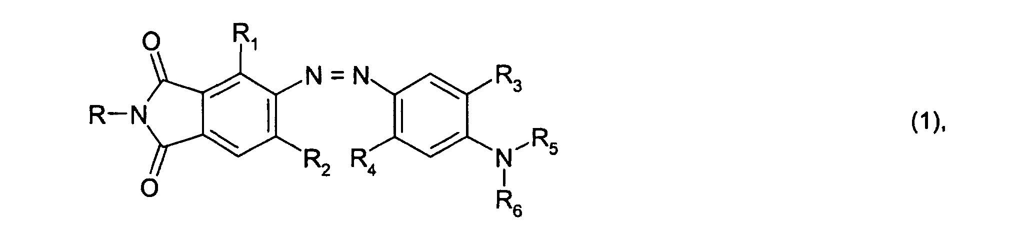 worin
R Methyl ist,
R₁ Wasserstoff, Halogen, Cyano oder Nitro ist,
R₂ Brom oder Cyano ist,
R₃ Wasserstoff, Halogen, C₁-C₄-Alkyl oder C₁-C₄-Alkoxy ist,
R₄ -NHCOR₇ ist wobei R₇ Ethyl oder Methyl bedeutet,
R₅ unsubstituiertes oder durch Hydroxy, Cyano, Acyloxy, 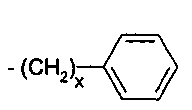 oder Phenyloxy substituiertes C₁-C₆-Alkyl, wobei x eine Zahl 0 bis 4 ist, und die Alkylkette ab C₂ gegebenenfalls durch einen oder mehrere Sauerstoffatome unterbrochen sein kann, oder einen Rest der Formel -CH₂CH₂-O-COR₈ oder der Formel 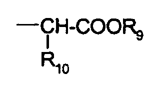 bedeutet, und
R₆ einen Rest der Formel 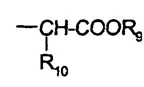 bedeutet, wobei R₈ und R₉ unabhängig voneinander C₁-C₄-Alkyl und R₁₀ Wasserstoff oder C₁-C₄-Alkyl sind.

R₁ als Halogen ist z.B. Fluor, Chlor oder Brom, insbesondere Chlor oder Brom, vor allem Brom.

R₃ als Halogen ist z.B. Fluor, Chlor oder Brom, insbesondere Chlor oder Brom, vor allem Chlor.

R₃, R₅, R₈, R₉ und R₁₀ als C₁-C₄-Alkyl sind unabhängig voneinander Methyl, Ethyl, n-Propyl, iso-Propyl, n-Butyl, iso-Butyl, sec-Butyl oder tert.-Butyl, mit folgenden Bevorzugungen:
Als R₃ bevorzugt ist Ethyl oder insbesondere Methyl.
Als R₅ bevorzugt ist Methyl oder insbesondere Ethyl.
Als R₈ bevorzugt ist Ethyl oder insbesondere Methyl.
Als R₉ bevorzugt ist Methyl und insbesondere Ethyl.
Als R₁₀ bevorzugt ist Methyl.

R₃ als C₁-C₄-Alkoxy ist z.B. Methoxy, Ethoxy, geradkettiges oder verzweigtes Propoxy oder geradkettiges oder verzweigtes Butoxy. Bevorzugt sind Ethoxy oder insbesondere Methoxy. Als Substituent Acyloxy in R₅ kommt in Frage insbesondere Propionyloxy oder vor allem Acetyloxy.

Bevorzugte Bedeutung von x ist 2 oder insbesondere 1.

R₅ als ein substituiertes C₁-C₆-Alkyl ist insbesondere ein durch Cyano substituiertes C₁-C₄-Alkyl, vor allem ein Cyanoethyl.

Besonders bevorzugt als R₁ ist Wasserstoff, Brom oder Cyano, insbesondere Wasserstoff oder Brom.

Besonders bevorzugt als R₂ ist Brom.

Besonders bevorzugt als R₃ ist Wasserstoff.

Besonders bevorzugt als R₅ ist Ethyl oder Cyanoethyl.

Ganz besonders bevorzugt als R₆ ist der Rest -CH(CH₃)-COOC₂H₅.

Besonders bevorzugt sind Farbstoffe der Formeln

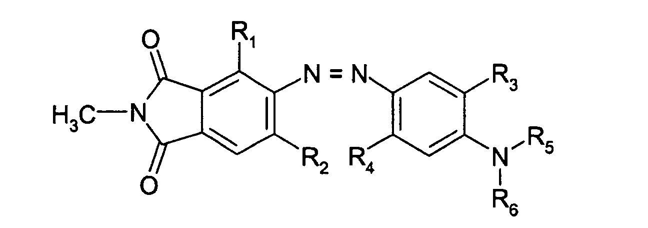

| Nr. | R₁ | R₂ | R₃ | R₄ | R₅ | R₆ |
|---|---|---|---|---|---|---|
| 100 | -H | -Br | -H | -NHCOCH₃ | -C₂H₅ | -CH(CH₃)COOC₂H₅ |
| 101 | -H | -Br | -H | -NHCOC₂H₅ | -C₂H₅ | -CH₂COOCH₃ |
| 102 | -H | -Br | -H | -NHCOCH₃ | -C₂H₅ | -CH₂COOC₂H₅ |
| 103 | -H | -Br | -H | -NHCOC₂H₅ | -C₂H₅ | -CH(CH₃)COOCH₃ |
| 104 | -H | -Br | -H | -NHCOCH₃ | -C₂H₅ | -CH₂COOCH₃ |
| 105 | -H | -Br | -H | -NHCOC₂H₅ | -C₂H₅ | -CH₂COOC₂H₅ |
| 106 | -H | -Br | -H | -NHCOCH₃ | -C₂H₅ | -CH(CH₃)COOCH₃ |
| 107 | -H | -Br | -H | -NHCOC₂H₅ | -C₂H₅ | -CH(CH₃)COOC₂H₅ |
| 108 | -H | -Br | -H | -NHCOCH₃ | -CH₂-C₆H₅ | -CH₂COOCH₃ |
| 109 | -H | -Br | -H | -NHCOCH₃ | -CH₂CH₂CN | -CH₂COOC₂H₅ |
| 114 | -H | -Br | -H | -NHCOCH₃ | -CH₂COOCH₃ | -CH(CH₃)COOC₂H₅ |
| 115 | -H | -Br | -H | -NHCOCH₃ | -CH₂COOC₂H₅ | -CH(CH₃)COOCH₃ |
| 116 | -H | -Br | -OCH₃ | -NHCOCH₃ | -C₂H₅ | -CH(CH₃)COOC₂H₅ |
| 117 | -H | -CN | -H | -NHCOCH₃ | -C₂H₅ | -CH(CH₃)COOC₂H₅ |
| 118 | -H | -CN | -H | -NHCOCH₃ | -C₂H₅ | -CH(CH₃)COOCH₃ |
| 119 | -H | -Br | -Cl | -NHCOCH₃ | -C₂H₅ | -CH(CH₃)COOC₂H₅ |
| 120 | -CN | -CN | -H | -NHCOCH₃ | -CH₂COOCH₃ | -CH(CH₃)COOC₂H₅ |
| 121 | -CN | -CN | -H | -NHCOCH₃ | -C₂H₅ | -CH(CH₃)COOC₂H₅ |
| 122 | -H | -CN | -H | -NHCOCH₃ | -CH₂COOCH₃ | -CH(CH₃)COOC₂H₅ |
| 123 | -Br | -Br | -H | -NHCOCH₃ | -C₂H₅ | -CH(CH₃)COOC₂H₅ |

Ganz besonders bevorzugt sind Farbstoffe der Formeln 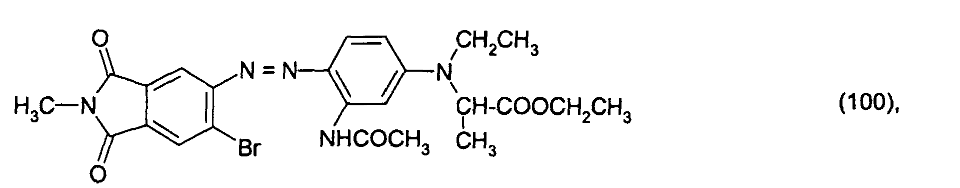 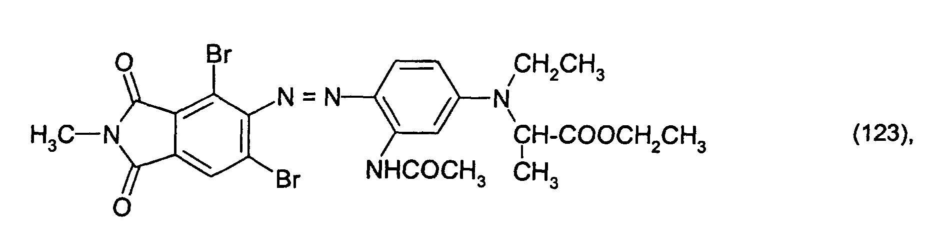 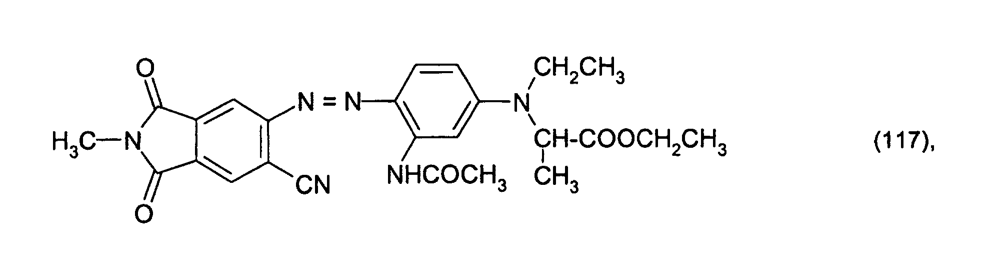 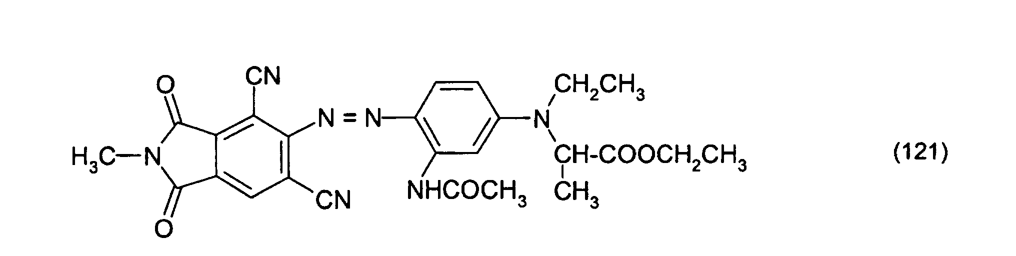 und

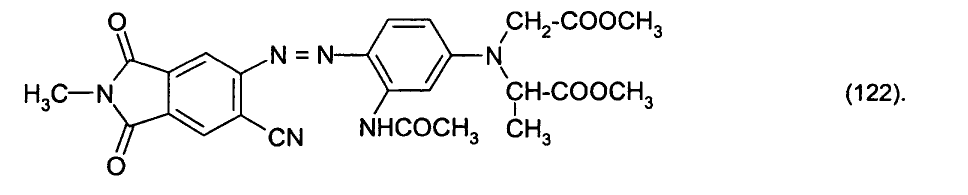

Einen weiteren Gegenstand der vorliegenden Erfindung stellt das Verfahren zur Herstellung der erfindungsgemässen Farbstoffe der Formel (1).

Diese werden beispielsweise so hergestellt, indem man ein Phthalimid der Formel 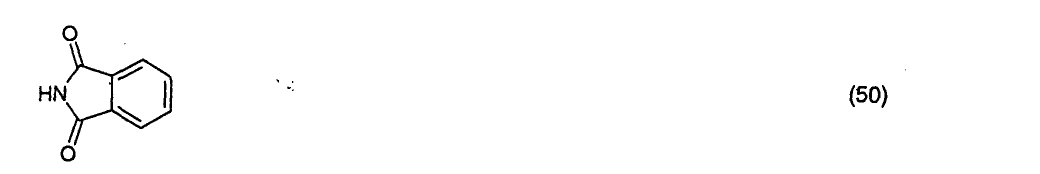 in sauerem Bereich nitriert, wie z.B. auf der Seite 459 in Organic Synthesis, Collective Volume 2, (a Revised Edition of Annual Volumes X-XIX), J.Wiley & Sons, beschrieben, die entstehende Nitroverbindung anschliessend z.B. gemäss einer in Journal of Organic Chemistry 32 (1967) auf Seite 1923, Absatz 3 angegebenen Methode alkyliert und z.B. nach einer in Bull. Soc. Chim. de France 1957 auf der Seite 569 beschriebenen reduktiven Behandlung zu einem Zwischenprodukt der Formel 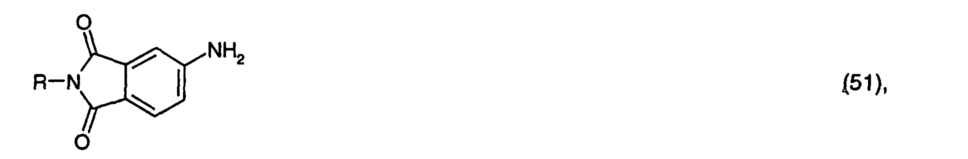 worin R die vorstehend genannte Bedeutung und Bevorzugung hat,
überführt.

Das Zwischenprodukt der Formel (51) wird nach allgemein bekannten Methoden in saurem Milieu nitriert oder ein- oder mehrfach halogeniert, wobei die Halogensubstituenten gegebenenfalls nach ebenfalls bekannten Methoden gegen Cyano ausgetauscht werden können und anschliessend diazotiert und auf eine Verbindung der Formel 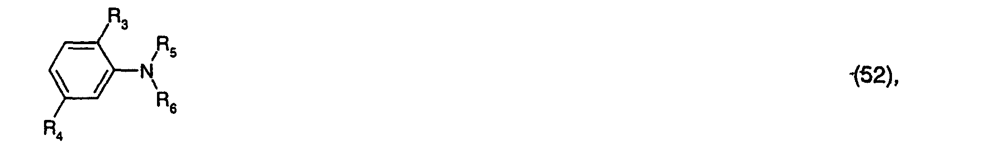 worin R₃, R₄, R₅ und R₆ die vorstehend genannte Bedeutungen und Bevorzugungen haben, gekoppelt.

Die Halogenierung wird z.B. so ausgeführt, dass man die Verbindung der Formel (51) zuerst in Essigsäure mit Natriumacetat, und anschliessend in gleichem Milieu mit Brom zu entsprechender Mono- oder Dibromverbindung umsetzt.

Die Diazotierung der Verbindung der Formel (51) erfolgt ebenfalls in an sich bekannter Weise, z.B. mit Natriumnitrit in saurem, z.B. salzsaurem oder schwefelsaurem, wässrigem Medium. Die Diazotierung kann aber auch mit anderen Diazotierungsmitteln, z.B. mit Nitrosylschwefelsäure ausgeführt werden. Bei der Diazotierung kann eine zusätzliche Säure im Reaktionsmedium anwesend sein, z.B. Phosphorsäure, Schwefelsäure, Essigsäure, Propionsäure, Salzsäure oder Mischungen dieser Säuren, z.B. Mischungen aus Propionsäure und Essigsäure. Zweckmässig wird die Diazotierung bei Temperaturen von -10 bis 30°C, z.B. von -10°C bis Raumtemperatur, durchgeführt.

Die Kupplung der diazotierten Verbindung der Formel (51) auf die Kupplungskomponente der Formel (52) erfolgt ebenfalls in bekannter Weise, beispielsweise in saurem, wässrigem oder wässrig- organischem Medium, vorteilhaft bei Temperaturen von -10 bis 30°C, insbesondere unter 10°C. Als Säuren verwendet man z.B. Salzsäure, Essigsäure, Propionsäure, Schwefelsäure oder Phosphorsäure.

Die Diazokomponenten der Formel (51) und die Kupplungskomponenten der Formel (52) sind bekannt oder können auf an sich bekannte Art und Weise hergestellt werden.

Die erfindungsgemässen Farbstoffe können als Farbstoffe zum Färben und Bedrucken von halbsynthetischen und insbesondere synthetischen hydrophoben Fasermaterialien, vor allem Textilmaterialien, verwendet werden. Textilmaterialien aus Mischgeweben, die derartige halbsynthetische bzw. synthetische hydrophobe Fasermaterialien enthalten, können ebenfalls mit Hilfe der erfindungsgemässen Verbindungen gefärbt oder bedruckt werden.
Als halbsynthetische Fasermaterialien kommen vor allem Cellulose 2½-Acetat und Cellulosetriacetat in Frage.

Synthetische hydrophobe Fasermaterialien bestehen vor allem aus linearen, aromatischen Polyestern, beispielsweise solchen aus Terephthalsäure und Glykolen, besonders Ethylenglykol oder Kondensationsprodukten aus Terephthalsäure und 1,4-Bis-(hydroxymethyl)-cyclohexan; aus Polycarbonaten, z.B. solchen aus α,α-Dimethyl-4,4-dihydroxy-diphenylmethan und Phosgen, aus Fasern auf Polyvinylchlorid- sowie Polyamid-Basis.

Die Applikation der erfindungsgemässen Verbindungen auf die Fasermaterialien erfolgt nach bekannten Färbeverfahren. Beispielsweise färbt man Polyesterfasermaterialien im Ausziehverfahren aus wässriger Dispersion in Gegenwart von üblichen anionischen oder nicht-ionischen Dispergiermitteln und gegebenenfalls üblichen Quellmitteln (Carrier) bei Temperaturen zwischen 80 und 140°C. Cellulose-2½ -acetat färbt man vorzugsweise zwischen 65 bis 85°C und Cellulosetriacetat bei Temperaturen zwischen 65 und 115°C.

Die erfindungsgemässen Farbstoffe färben im Färbebad gleichzeitig anwesende Wolle und Baumwolle nicht oder nur wenig an (sehr gute Reserve), so dass sie auch gut zum Färben von Polyester/Wolle- und Polyester/Cellulosefaser-Mischgeweben verwendet werden können.
Die erfindungsgemässen Farbstoffe eignen sich zum Färben nach dem Thermosol-Verfahren, im Ausziehverfahren und für Druckverfahren.

Die genannten Fasermaterialien können dabei in den verschiedenen Verarbeitungsformen vorliegen, wie z.B. als Faser, Faden oder Vlies, als Gewebe oder Gewirke.

Es ist vorteilhaft, die erfindungsgemässen Farbstoffe vor ihrer Verwendung in ein Farbstoffpräparat zu überführen. Hierzu wird der Farbstoff vermahlen, so dass seine Teilchengrösse im Mittel zwischen 0,1 und 10 Mikron beträgt. Das Vermahlen kann in Gegenwart von Dispergiermitteln erfolgen. Beispielsweise wird der getrocknete Farbstoff mit einem Dispergiermittel gemahlen oder in Pastenform mit einem Dispergiermittel geknetet und hierauf im Vakuum oder durch Zerstäuben getrocknet. Mit den so erhaltenen Präparaten kann man nach Zugabe von Wasser Druckpasten und Färbebäder herstellen.

Beim Bedrucken wird man die üblichen Verdickungsmittel verwenden, z.B. modifizierte oder nichtmodifizierte natürliche Produkte, beispielsweise Alginate, British-Gummi, Gummi arabicum, Kristallgummi, Johannisbrotkernmehl, Tragant, Carboxymethylcellulose, Hydroxyethylcellulose, Stärke oder synthetische Produkte, beispielsweise Polyacrylamide, Polyacrylsäure oder deren Copolymere oder Polyvinylalkohole.

Die erfindungsgemässen Farbstoffe verleihen den genannten Materialien, vor allem den Polyestermaterialien, egale Farbtöne von sehr guten Gebrauchsechtheiten, wie vor allem guter Lichtechtheit, Thermofixier-, Plissier-, Chlor- und Nassechtheit wie Wasser-, Schweiss- und Waschechtheit; die Ausfärbungen sind ferner ge kennzeichnet durch sehr gute Reibechtheit. Besonders hervorzuheben sind die guten Schweiss- und insbesondere Waschechtheiten der erhaltenen Färbungen.

Die erfindungsgemässen Farbstoffe können auch gut verwendet werden zur Herstellung von Mischnuancen zusammen mit anderen Farbstoffen.

Ausserdem eignen sich die erfindungsgemässen Farbstoffe auch gut zum Färben von hydrophoben Fasermaterialien aus überkritischem CO₂.

Die vorstehend genannte Verwendung der erfindungsgemässen Farbstoffe stellt ebenso einen Gegenstand der vorliegenden Erfindung dar wie ein Verfahren zum Färben oder Bedrucken von halbsynthetischen oder synthetischen hydrophoben Fasermaterialien, insbesondere Textilmaterialien, welches darin besteht, einen erfindungsgemässen Farbstoff auf die genannten Materialien aufzubringen oder ihn in diese einzuarbeiten. Die genannten hydrophoben Fasermaterialien sind vorzugsweise textile Polyestermaterialien. Weitere Substrate, die durch das erfindungsgemässe Verfahren behandelt werden können, sowie bevorzugte Verfahrensbedingungen sind vorstehend bei der näheren Erläuterung der Verwendung der erfindungsgemässen Farbstoffe zu finden.
Ein weiterer Gegenstand der Erfindung sind die durch das genannte Verfahren gefärbten bzw. bedruckten hydrophoben Fasermaterialien, vorzugsweise Polyester-Textilmaterialien.
Die erfindungsgemässen Farbstoffe eignen sich ausserdem für modeme Aufzeichnungsverfahren, wie z.B. Thermotransfer-Printing.
Die nachfolgenden Beispiele dienen der Veranschaulichung der Erfindung. Darin sind, sofern nicht anders angegeben, die Teile Gewichtsteile und die Prozente Gewichtsprozente.
Die Temperaturen sind in Celsiusgraden angegeben. Die Beziehung zwischen Gewichtsteilen und Volumenteilen ist dieselbe wie zwischen Gramm und Kubikzentimeter.

### Beispiel 1:

In einer Laborreaktionsapparatur werden 105,00 g Eisessig vorgelegt und innerhalb von 3 Minuten bei Raumtemperatur 5,24 g der Verbindung der Formel 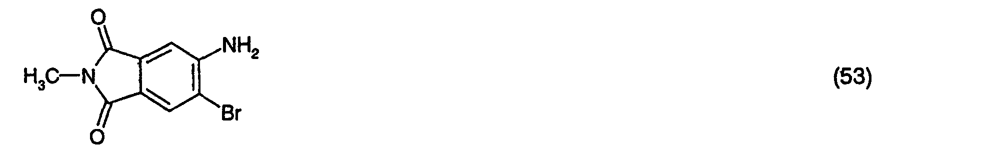 eingetragen. Die entstandene grünliche Suspension wird 5 Minuten verrührt und anschliessend mit 1,96 g einer 98%-igen Schwefelsäure innerhalb von 7 Minuten versetzt und 10 Minuten verrührt. Danach werden zu der Reaktionsmischung innerhalb von 20 Minuten unter Kühlung bei 15-20°C 6,50 g einer 40%-igen Nitrosylschwefelsäure zugetropft und 1 Stunde bei dieser Temperatur verrührt. Die ausreagierte Mischung wird innerhalb von 10 Minuten mit 8,00 g Eiswasser versetzt und anschliessend zu einem Gemisch, bestehend aus 25,20 g Eisessig, 2,32 g einer 32%-igen Salzsäure 80,00 g Eiswasser und 20,60 g einer 31,1%-igen wässrigen Lösung der Verbindung der Formel 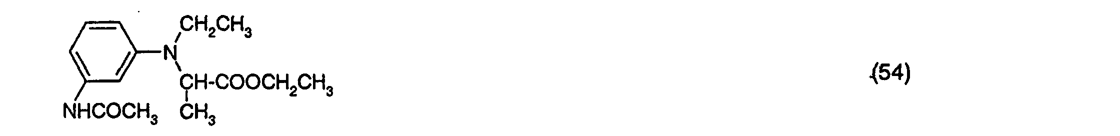 bei einem pH-Wert von ca. 2,5 und einer Temperatur von 0-5°C innerhalb von 40 Minuten zugetropft und 40 Minuten verrührt. Danach werden 29,00 g einer 15.%-igen wässrigen Natriumhydroxydlösung bei einer Temperatur von 0-5°C innerhalb von 40 Minuten zugetropft, die Mischung wird auf einen pH-Wert von 1,0 gestellt und 15 Minuten nachgerührt.
Die entstandene rote Suspension wird abgenutscht, mit 250 g Wasser deion. bis einen pH-Wert > 5 gewaschen und getrocknet. Man erhält 9,83 g des Farbstoffes der Formel 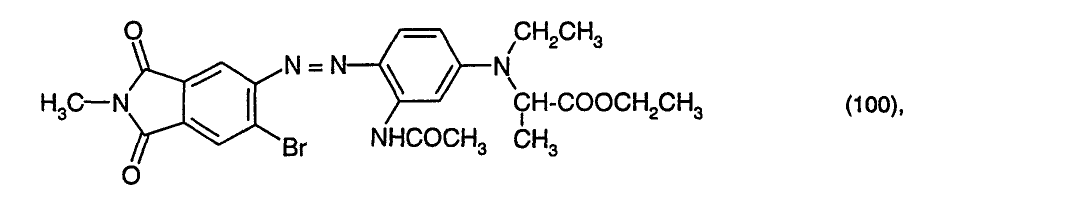 welcher Polyester in einem brillanten roten Ton färbt.

### Beispiel 2:

In einer Laborreaktionsapparatur werden 26,25 g Eisessig vorgelegt und innerhalb von 3 Minuten bei Raumtemperatur 1,67 g der Verbindung der Formel 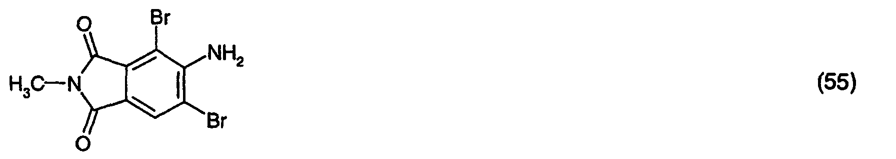 eingetragen. Die entstandene grünliche Suspension wird 5 Minuten verrührt und anschliessend mit 0,54 g einer 98%-igen Schwefelsäure innerhalb von 7 Minuten versetzt und 10 Minuten verrührt. Danach werden zu der Reaktionsmischung innerhalb von 20 Minuten unter Kühlung bei 15-20°C 1,86 g einer 40%-igen Nitrosylschwefelsäure zugetropft und 1 Stunde bei dieser Temperatur verrührt. Die ausreagierte Mischung wird dann innerhalb von 10 Minuten zu einem Gemisch, bestehend aus 6,30 g Eisessig, 0,58 g einer 32%-igen Salzsäure 11,00 g Eiswasser und 5,20 g einer 31,1%-igen wässrigen Lösung der Verbindung der Formel (54) bei einer Temperatur von 0-5°C zugetropft und 120 Minuten verrührt. Danach werden innerhalb von 10 Minuten 15,00 g Eiswasser zugetropft, die entstandene rote Suspension abgenutscht, mit Wasser deion. gewaschen und getrocknet. Man erhält 2,10 g des Farbstoffes der Formel 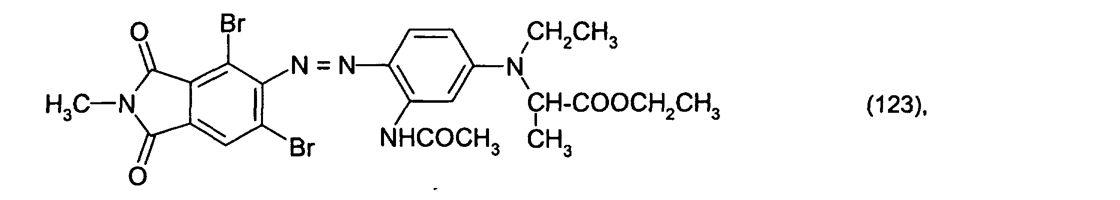 welcher Polyester in einem rotbraunen Ton färbt.

### Beispiel 3:

In einer Laborreaktionsapparatur werden 1,24 g des Farbstoffes der Formel (123) aus Beispiel 2 und 10 ml Dimethylsulfoxid vorgelegt und bei Raumtemperatur 10 Minuten verrührt. Danach werden innerhalb von 10 Minuten 0,10 g Natriumcyanid und 0,36 g Kupfer-(I)-cyanid eingetragen und die Mischung wird 60 Minuten verrührt. Anschliessend werden noch einmal 0,10 g Natriumcyanid und 0,36 g Kupfer-(I)-cyanid innerhalb 10 Minuten zugegeben, 10 Minuten verrührt und danach die Temperatur innerhalb 4 Minuten auf 50°C erhöht. Bei dieser Temperatur wird die Reaktionsmischung 5 Minuten gerührt, dann auf Raumtemperatur abgekühlt, innerhalb von 10 Minuten mit 2,00 g Wasser versetzt und weitere 30 Minuten verrührt. Danach wird die Suspension abgenutscht, mit warmem Wasser (50°C) gewaschen und getrocknet.
Man erhält 0,80 g des Farbstoffes der Formel 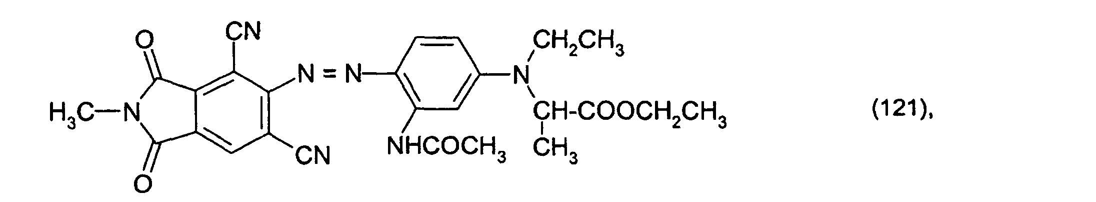 welcher Polyester in einem blauen Ton färbt.

### Beispiel 4:

1 Gewichtsteil des Farbstoffes der Formel 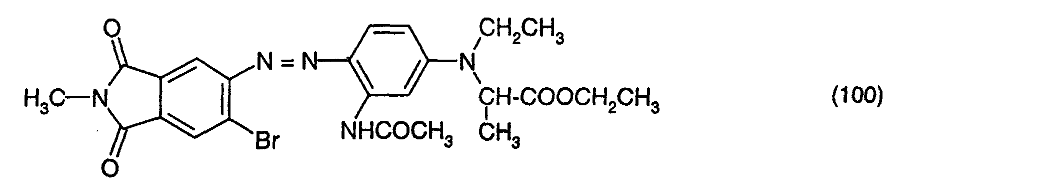 wird zusammen mit 17 Gewichtsteilen Wasser und 2 Gewichtsteilen eines handelsüblichen Dispergators vom Typ Dinaphthylmethandisulfonat in einer Sandmühle gemahlen und in eine 5%-ige wässrige Dispersion überführt.
Mit dieser Formulierung wird im Hochtemperatur-Ausziehvervahren bei 130°C eine 1%-ige Färbung (bezogen auf Farbstoff und Substrat) auf Polyestergewebe erstellt und reduktiv gereinigt. Die so erzielte Färbung weist sehr gute Gebrauchsechtheiten, insbesondere eine ausgezeichnete Waschechtheit auf.

Diesselben guten Echtheiten lassen sich erzielen, wenn Polyestergewebe im Thermosolverfahren gefärbt wird (10g/l Farbstoff, Flottenaufnahme 50%, Fixiertemperatur 210°C).

## Patentansprüche

1. Farbstoffe der Formel 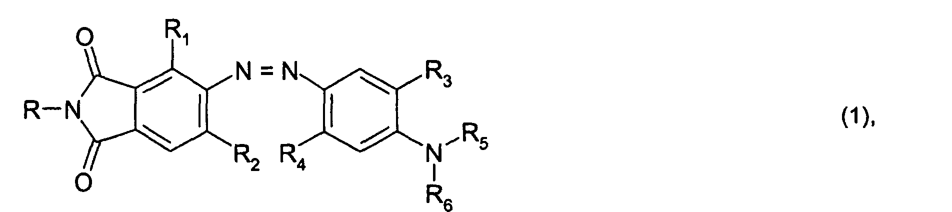 worin
R Methyl ist, R₁ Wasserstoff, Halogen, Cyano oder Nitro ist, R₂ Brom oder Cyano ist, R₃ Wasserstoff, Halogen, C₁-C₄-Alkyl oder C₁-C₄-Alkoxy ist, R₄ -NHCOR₇ ist, worin R₇ Ethyl oder Methyl bedeutet, R₅ unsubstituiertes oder durch Hydroxy, Cyano, Acyloxy, 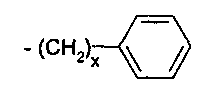 oder Phenyloxy substituiertes C₁-C₆-Alkyl, wobei x eine Zahl 0 bis 4 ist, und die Alkylkette ab C₂ gegebenenfalls durch einen oder mehrere Sauerstoffatome unterbrochen sein kann, oder einen Rest der Formel -CH₂CH₂-O-COR₈, der Formel 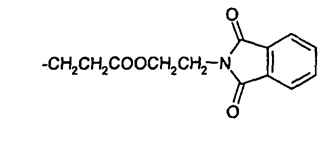 oder der Forme 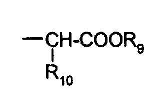 bedeutet, und R₆ einen Rest der Formel 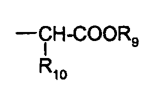 bedeutet, wobei R₈ und R₉ unabhängig voneinander C₁-C₄-Alkyl und R₁₀ Wasserstoff oder C₁-C₄-Alkyl sind.

2. Farbstoffe gemäss einem der Anspruch 1, worin R₁ Wasserstoff, Brom oder Cyano ist.

3. Farbstoffe gemäss einem der Ansprüche 1 oder 2, worin R₃ Wasserstoff ist.

4. Farbstoffe gemäss einem der Ansprüche 1 bis 3, worin R₅ Ethyl oder Cyanoethyl ist.

5. Farbstoffe gemäss Anspruch 1, worin Re der Rest -CH(CH₃)COOC₂H₅ ist.

6. Farbstoff gemäss Anspruch 1 der Formel

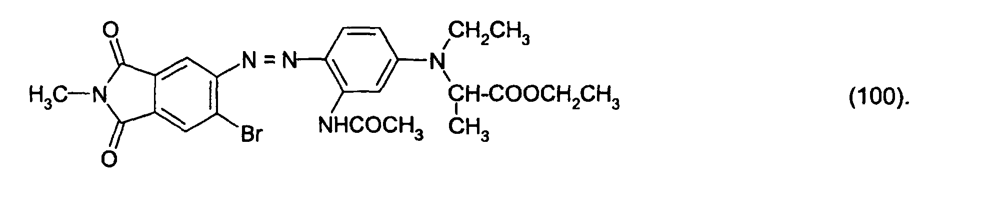

7. Farbstoff gemäss Anspruch 1 der Formel

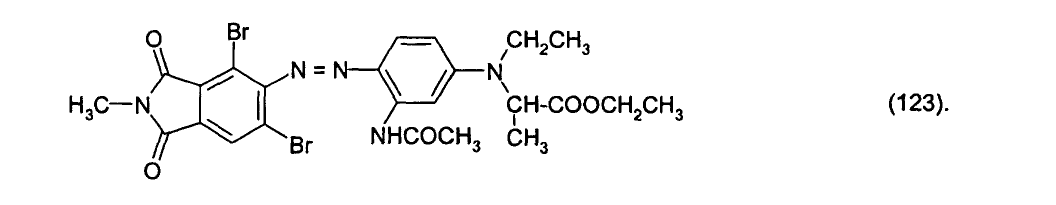

8. Farbstoff gemäss Anspruch 1 der Formel

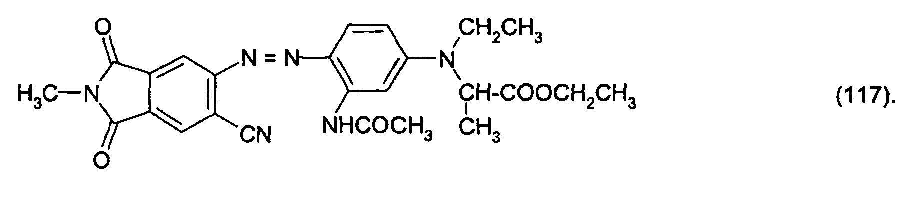

9. Farbstoff gemäss Anspruch 1 der Formel

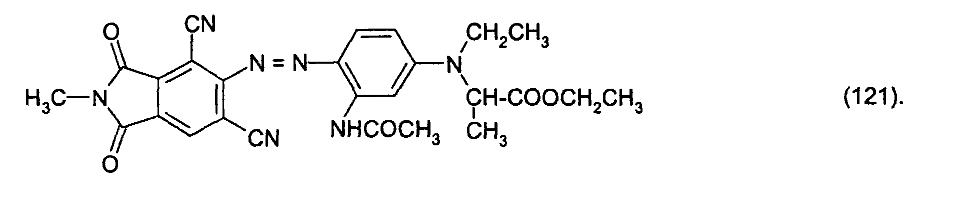

10. Farbstoff gemäss Anspruch 1 der Formel

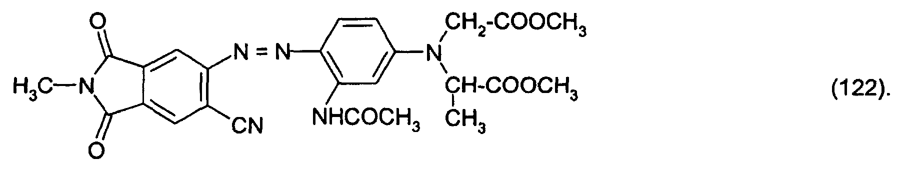

11. Verfahren zur Herstellung der Farbstoffe der Formel (1) gemäss Anspruch 1, **dadurch gekennzeichnet, dass** man ein Phthalimid der Formel 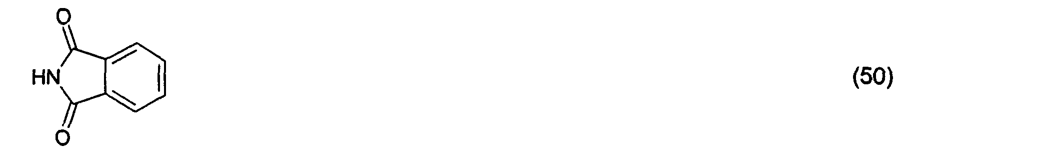 in sauerem Bereich nitriert, die entstehende Nitroverbindung anschliessend alkyliert und mittels einer reduktiven Behandlung zu einem Zwischenprodukt der Formel 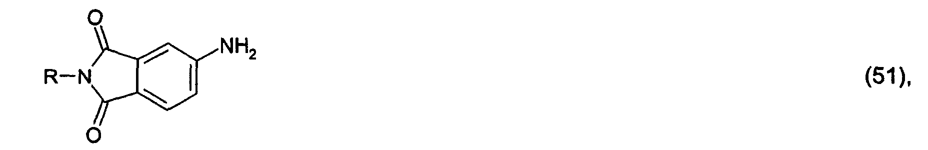 überführt, das Zwischenprodukt der Formel (51) in saurem Milieu nitriert oder ein- oder mehrfach halogeniert, wobei die Halogensubstituenten gegebenenfalls gegen Cyano ausgetauscht werden können und anschliessend diazotiert und auf eine Verbindung der Formel 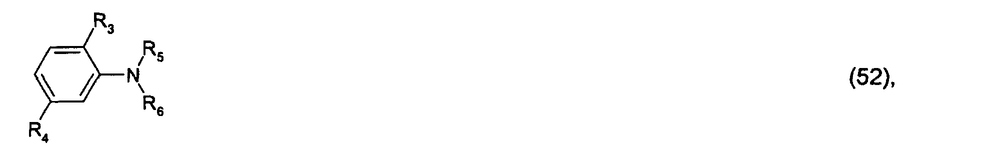 worin R, R₃, R₄, R₅ und R₆ die unter der Formel (1) angegebene Bedeutungen haben koppelt.

12. Verfahren zum Färben oder Bedrucken von halbsynthetischen oder synthetischen hydrophoben Fasermaterialien, insbesondere Textilmaterialien, **dadurch gekennzeichnet, dass** man einen Farbstoff der Formel (1) gemäss Anspruch 1 Farbstoff auf die genannten Materialien aufbringt oder in diese einarbeitet.

13. Verwendung der Farbstoffe der Formel (1) gemäss Anspruch 1 zum Färben oder Bedrucken von polyesterhaltigen Textilmaterialien.

14. Die nach dem Verfahren gemäss Anspruch 12 gefärbten oder bedruckten hydrophoben Fasermaterialien, vorzugsweise polyesterhaltigen Textilmaterialien.

## Claims

1. A dye of formula 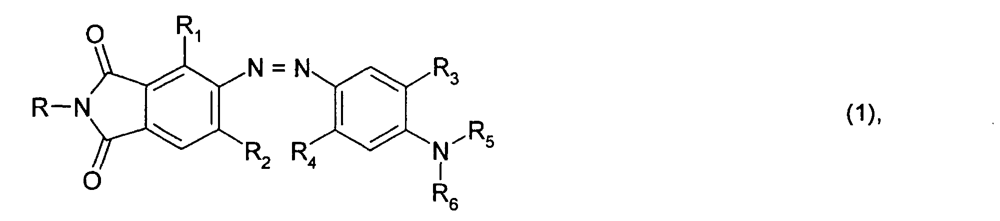 wherein
R is methyl, R₁ is hydrogen, halogen, cyano or nitro, R₂ is bromine or cyano, R₃ is hydrogen, halogen, C₁-C₄alkyl or C₁-C₄alkoxy, R₄ is -NHCOR₇ wherein R₇ is ethyl or methyl, R₅ is C₁-C₆alkyl that is unsubstituted or substituted by hydroxy, cyano, acyloxy, 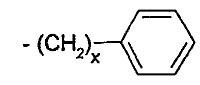 or by phenoxy, x being a number from 0 to 4 and it being possible for the alkyl chain, from C₂ upwards, optionally to be interrupted by one or more oxygen atoms, or is a radical of formula -CH₂CH₂-O-COR₈ or of formula 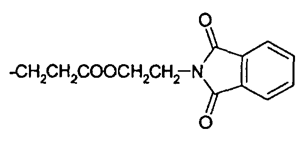 or of formula 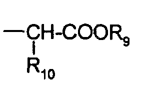 and R₆ is a radical of formula 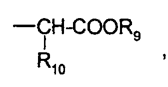 R₈ and R₉ each independently of the other being C₁-C₄alkyl and R₁₀ being hydrogen or C₁-C₄alkyl.

2. A dye according to claim 1, wherein R₁ is hydrogen, bromine or cyano.

3. A dye according to either claim 1 or claim 2, wherein R₃ is hydrogen.

4. A dye according to any one of claims 1 to 3, wherein R₅ is ethyl or cyanoethyl.

5. A dye according to claim 1, wherein R₆ is the radical -CH(CH₃)COOC₂H₅.

6. Dye according to claim 1, of formula

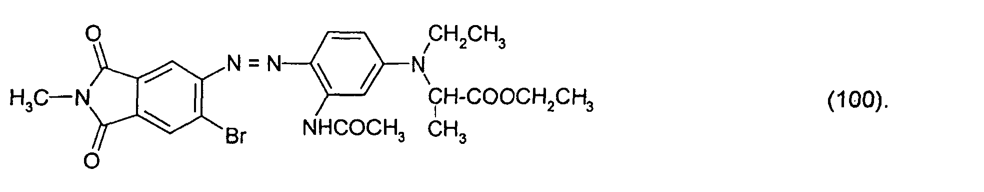

7. Dye according to claim 1, of formula

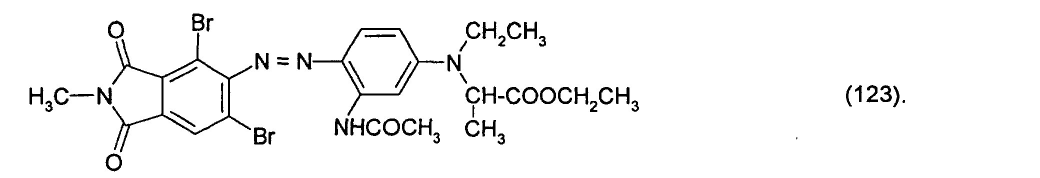

8. Dye according to claim 1, of formula

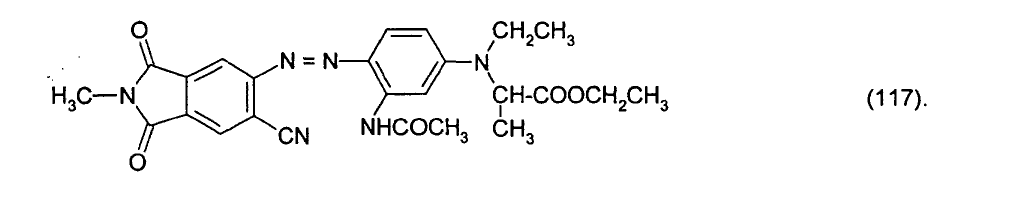

9. Dye according to claim 1, of formula

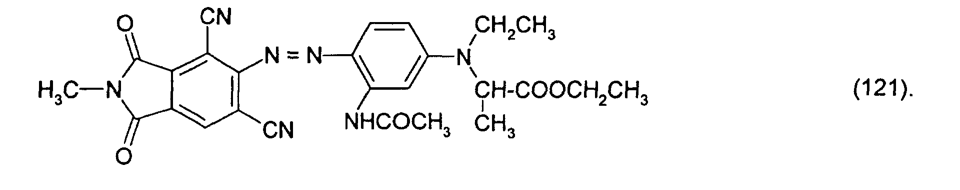

10. Dve according to claim 1, of formula

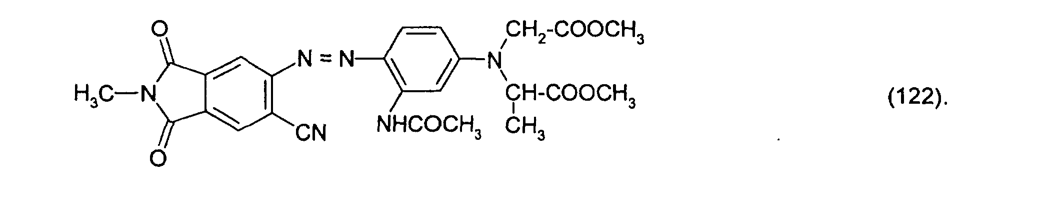

11. A process for the preparation of a dye of formula (1) according to claim 1, in which process a phthalimide of formula 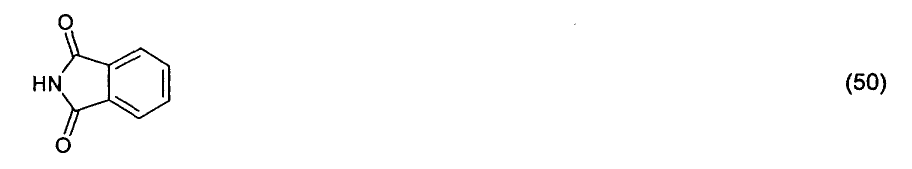 is nitrated in the acid range, the resulting nitro compound is then alkylated and, by means of reductive treatment, converted into an intermediate of formula 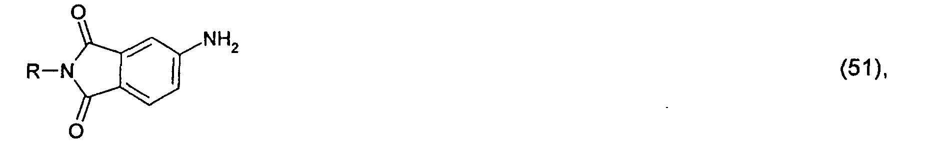 and the intermediate of formula (51) is, in an acid medium, nitrated or mono- or poly-halogenated - it being possible, if desired, for the halogen substituents to be replaced by cyano - and then diazotised and coupled to a compound of formula 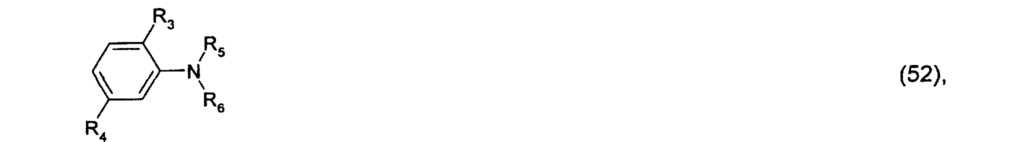 wherein R, R₃, R₄, R₅ and R₆ are as defined for formula (1).

12. A process for dyeing or printing semi-synthetic or synthetic hydrophobic fibre materials, especially textile materials, in which process a dye of formula (1) according to claim 1 dye is applied to the said materials or incorporated into them.

13. Use of a dye of formula (1) according to claim 1 in dyeing or printing polyester-containing textile materials.

14. A hydrophobic fibre material, especially a polyester-containing textile material, dyed or printed by the method according to claim 12.

## Revendications

1. Colorants de formule 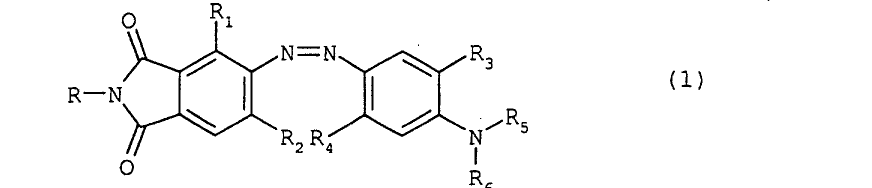 dans laquelle
R est le groupe méthyle, R₁ est un atome d'hydrogène ou d'halogène ou un groupe cyano ou nitro, R₂ est le brome ou le groupe cyano, R₃ est un atome d'hydrogène ou d'halogène ou un groupe alkyle en C₁ à C₄ ou alcoxy en C₁ à C₄, R₄ est -NHCOR₇ où R₇ est le groupe éthyle ou méthyle, R₅ est un groupe alkyle en C₁ à C₆ non substitué ou substitué par hydroxy, cyano, acyloxy, 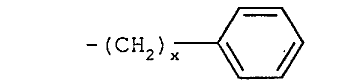 ou phényloxy, x étant un nombre de 0 à 4, et la chaîne alkyle à partir de C₂ pouvant éventuellement être interrompue par un ou plusieurs atomes d'oxygène,
ou encore un radical de formule -CH₂CH₂-O-COR₈, de formule 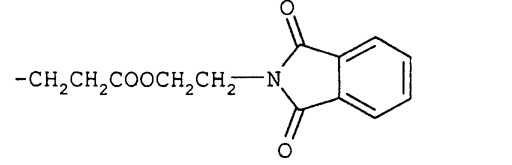 ou de formule 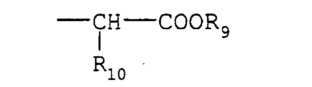 et R₆ est un radical de formule 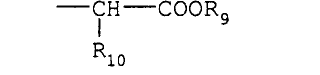 R₈ et R₉ représentant chacun indépendamment de l'autre un groupe alkyle en C₁ à C₄, et R₁₀ étant un atome d'hydrogène ou un groupe alkyle en C₁ à C₄.

2. Colorants selon la revendication 1, dans laquelle R₁ est un atome d'hydrogène ou de brome ou le groupe cyano.

3. Colorants selon l'une des revendications 1 et 2, dans lesquelles R₃ est un atome d'hydrogène.

4. Colorants selon l'une des revendications 1 à 3, dans lesquelles R₅ est le groupe éthyle ou cyanoéthyle.

5. Colorants selon la revendication 1, dans laquelle R₈ est le radical -CH(CH₃)COOC₂H₅.

6. Colorant selon la revendication 1, de formule

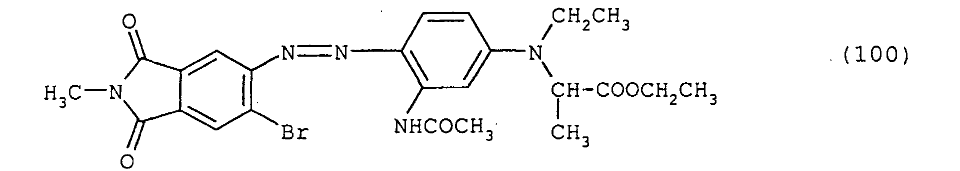

7. Colorant selon la revendication 1, de formule

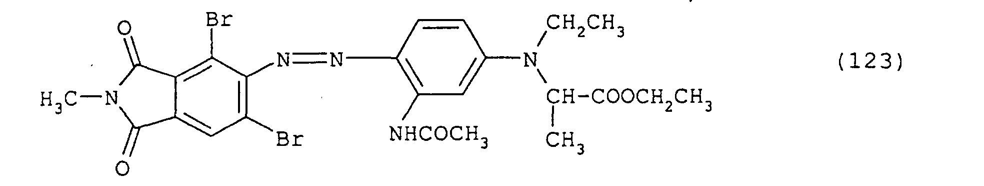

8. Colorant selon la revendication 1, de formule

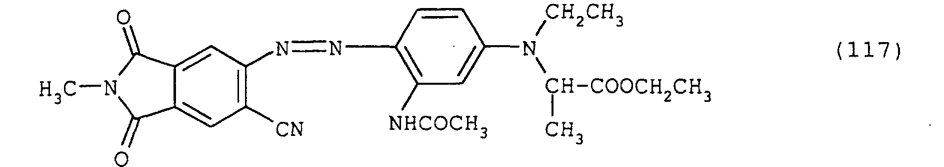

9. Colorant selon la revendication 1, de formule

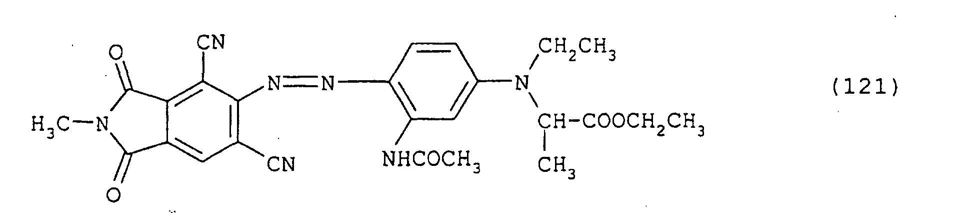

10. Colorant selon la revendication 1, de formule

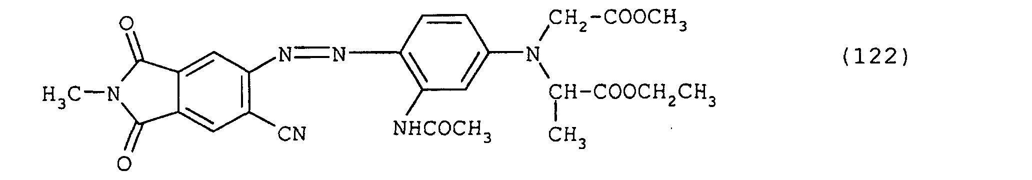

11. Procédé de préparation des colorants de formule 1 selon la revendication 1, **caractérisé en ce qu'**on soumet à une nitration un phtalimide de formule 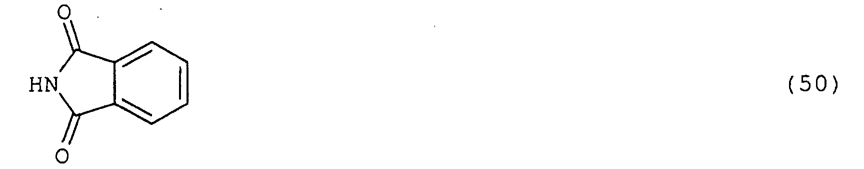 en milieu acide, puis on alkyle le composé nitro obtenu et, par un traitement par réduction, on le convertit en un produit intermédiaire de formule 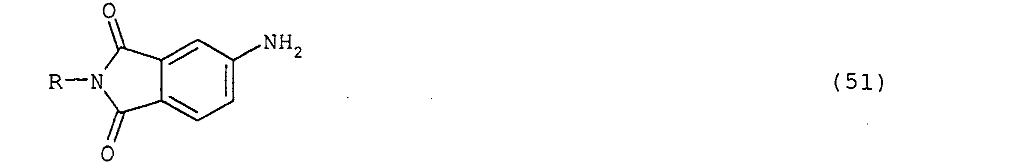 on nitre le produit intermédiaire de formule (51) en milieu acide, ou encore on l'halogène une ou plusieurs fois, les substituants halogéno pouvant éventuellement être remplacés par des groupes cyano, puis on procède à une diazotation, puis à une copulation sur un composé de formule 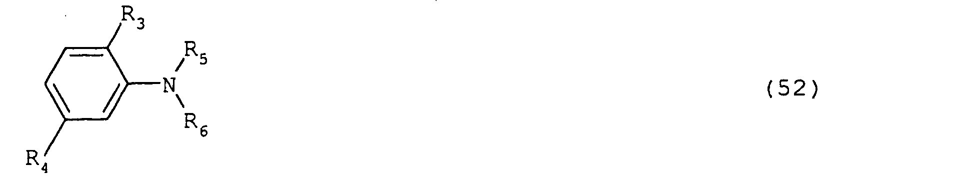 dans laquelle R₁, R₃, R₄, R₅ et R₆ ont les significations données à propos de la formule (1).

12. Procédé pour teindre ou imprimer des matériaux fibreux hydrophobes semi-synthétiques ou synthétiques, en particulier des matériaux textiles, **caractérisé en ce qu'**on applique un colorant de formule (1) selon la revendication 1 sur les matériaux mentionnés, ou encore on l'y incorpore.

13. Utilisation des colorants de formule (1) selon la revendication 1 pour teindre ou imprimer des matériaux textiles contenant des polyesters.

14. Les matériaux fibreux hydrophobes teints ou imprimés par le procédé selon la revendication 12, en particulier des matériaux textiles contenant des polyesters.
